(19) **Europäisches Patentamt**

**European Patent Office**

**Office européen des brevets**

(11) **EP 1 477 019 B1**

(12) **FASCICULE DE BREVET EUROPEEN**

(45) Date de publication et mention
de la délivrance du brevet:
**07.06.2006 Bulletin 2006/23**

(21) Numéro de dépôt: **03717359.8**

(22) Date de dépôt: **31.01.2003**

(51) Int Cl.:
*H04N 1/195* (2006.01)      *G02B 3/00* (2006.01)

(86) Numéro de dépôt international:
**PCT/FR2003/000290**

(87) Numéro de publication internationale:
**WO 2003/071778 (28.08.2003 Gazette 2003/35)**

(54) **PROCEDE POUR TRANSFERER UNE IMAGE NUMERIQUE EN VUE DE SA RESTITUTION VISUELLE, ET DISPOSITIF POUR LA MISE EN OEUVRE DE CE PROCEDE**

VERFAHREN ZUM TRANSFERIEREN EINES DIGITALEN BILDES, UM SO DAS DIGITALE BILD VISUELL WIEDERHERZUSTELLEN, UND EINRICHTUNG ZUR AUSFÜHRUNG DES VERFAHRENS

METHOD FOR TRANSFERRING A DIGITAL IMAGE SO AS TO VISUALLY RESTORE SAID DIGITAL IMAGE, AND DEVICE FOR CARRYING OUT SAID METHOD

(84) Etats contractants désignés:
**AT BE BG CH CY CZ DE DK EE ES FI FR GB GR IE IT LI LU MC NL PT SE SI SK TR**

(30) Priorité: **19.02.2002 FR 0202082**

(43) Date de publication de la demande:
**17.11.2004 Bulletin 2004/47**

(73) Titulaire: **KIS**
**38130 Echirolles (FR)**

(72) Inventeurs:
• **LAN, Ke-Hua**
**F-38100 Grenoble (FR)**

• **LAVERGNE, Patrice**
**F-38770 Monteynard (FR)**

(74) Mandataire: **Vuillermoz, Bruno et al**
**Cabinet Laurent & Charras**
**B.P. 32**
**20, rue Louis Chirpaz**
**69134 Ecully Cédex (FR)**

(56) Documents cités:
**EP-A- 0 615 150          EP-A- 0 987 875**
**US-A- 4 956 663**

**Description**

L'invention concerne un procédé perfectionné pour le transfert d'images numériques en vue de leur restitution visuelle, en mettant en oeuvre un écran à cristaux liquides transparent. Elle concerne également le dispositif pour la mise en oeuvre d'un tel procédé.

Dans le cadre du développement des nouvelles technologies pour la projection d'affichage d'informations mettant en oeuvre des signaux numériques, l'utilisation de panneaux et autres écrans à cristaux liquides, plus communément dénommés sous l'expression en langue anglaise « LCD » *(LIQUID CRISTAL DISPLAY)* a contribué à simplifier tant les procédés de transfert que les dispositifs les mettant en oeuvre.

De tels écrans « LCD » se sont, de fait, avérés intéressant dans le cadre du développement du concept API (pour *Advanced Photographie Image*), mettant en oeuvre le principe du stockage numérique de l'image. Ce stockage numérique de l'image impose, pour sa réalisation sur support, notamment papier, sa restitution. Le papier mis en oeuvre dépend, quant à lui, d'une impression numérique ou argentique.

Les avantages de l'utilisation de tels écrans LCD sont communément les suivants :

- ils sont géométriquement stables ;
- le composant ne nécessite pas de haut voltage ;
- et par ailleurs sa fabrication complètement automatisée, assure une très bonne régularité en termes de performance.

Cependant, son utilisation dans le domaine de la photographie, et plus particulièrement dans le domaine de l'impression de papier photosensible, pose deux types de problèmes :

- le premier réside dans le fait que le pixel d'images sur LCD, qui présente traditionnellement une forme carrée, comporte une surface active de pixel de forme rectangulaire, qui ne représente environ que 50 à 75% seulement de la surface totale dudit pixel. De fait, il existe donc une zone non active du pixel d'image, se matérialisant sous la forme de deux bandes, respectivement une bande relativement large sur l'un des côtés des pixels, et une bande un peu moins large sur le côté, immédiatement perpendiculaire adjacente, qui, projetée sur le papier photosensible, par un objectif de projection, génère des traits blancs horizontaux et verticaux sur la photo définitive, ce qui limite la netteté, la résolution et partant le rendu de la photo ;
- L'autre problème réside dans le fait que les LCD actuels présentent une résolution limitée à 1024 x 1280 pixels environ, voire à 1200x1600 pixels. Cette résolution limitée, inhérente à la technologie de fabrication, n'est pas suffisante pour les photos de format supérieur à 10 x 15 cm, puisqu'une telle résolution est déjà limitée à environ 210 dpi, voire à 266 dpi pour des LCD de 1200x1600 pixels, soit environ quatre à cinq paires de ligne/mm (4pl/mm - 5pl/mm) c'est à dire la limite acceptable pour une photo numérique.

Afin de surmonter ces différents inconvénients, on a proposé, par exemple dans le document EP-A-0 987 875 du Demandeur, un procédé visant notamment à opérer au moyen d'un organe optique unique, au moins un décalage latéral dans le plan de projection de chacun des pixels de l'image affichée sur le LCD, et à réaliser une ou plusieurs expositions au niveau dudit support de restitution visuel pour chacun de ces décalages.

Ce faisant, l'exposition de ces petits décalages latéraux, d'environ un demi-pixel, des images affichées sur le LCD dans le plan d'exposition, permet d'aboutir à une élimination importante des traits blancs horizontaux ou verticaux générés par le LCD et inhérents à sa technologie de fabrication.

En revanche, ce procédé induit une légère surexposition, générant des traits gris, qui, s'ils sont certes de faible contraste ou de dimensions réduites, de sorte qu'ils ne sont pas observables à l'oeil nu pour les photos de petit format, apparaissent néanmoins pour les photos de plus grandes dimensions.

A cet effet, le dispositif préconisé met en oeuvre une lame à faces parallèles unique d'épaisseur constante, transparente au spectre de la lumière d'exposition, et située sur le trajet optique de la source lumineuse entre l'écran LCD et l'objectif de projection.

Cette lame à faces parallèles est en outre susceptible d'être animée d'un mouvement de rotation discret ou continu, dont l'axe de rotation est parallèle ou non à l'axe optique. En outre, cette lame à faces parallèles est inclinée d'un angle de valeur déterminée par rapport au plan perpendiculaire à son axe de rotation.

C'est cette lame à faces parallèles qui permet de réaliser les décalages latéraux de l'image affichée sur LCD, pour aboutir à des décalages beaucoup plus précis que les décalages mécaniques susceptibles d'être obtenus par les dispositifs de l'art antérieur.

Incontestablement, si la mise en oeuvre d'un tel dispositif permet d'aboutir à une optimisation de la qualité de restitution, on observe cependant des traces grises, visibles pour les photos de plus grand format, inhérentes à la forme rectangulaire du pixel LCD, et à une taille trop grande de la surface active dudit pixel LCD. De plus, la résolution est insuffisante pour les photos de grand format.

L'objectif de la présente invention est de surmonter ces inconvénients en contrôlant tant la forme que la taille du pixel LCD, ainsi qu'en ajoutant des pixels d'image, afin d'augmenter la résolution des photos de plus grand format.

A cet effet, l'invention propose un procédé pour restituer visuellement une image numérique, affichée sur un écran à cristaux liquides LCD transparent, qui consiste :

- à associer à l'écran LCD un réseau de micro-lentilles au niveau de sa face d'entrée, en amont d'un masque noir définissant des ouvertures situées en regard de chacune des cellules de l'écran, chacune des cellules constitutives du LCD étant associée à une micro-lentille ;
- à utiliser une optique de projection télécentrique, destinée à augmenter le contraste et l'uniformité de l'image au niveau de la restitution visuelle ;
- à contrôler l'angle de divergence du faisceau incident de ladite lumière d'exposition ou d'éclairement, de telle sorte à induire, en association avec le réseau de micro-lentilles et le masque, le contrôle de la taille et de la forme du spot émergeant de chacune des cellules du LCD, et en association avec l'optique de projection télécentrique le contrôle de la taille et la forme effectives des pixels sur la restitution visuelle ;
- à opérer au moyen d'un organe, au moins un décalage latéral dans le plan de projection de l'écran LCD ou de chacun des pixels de l'image affichée sur le LCD;
- et à réaliser une ou plusieurs expositions au niveau dudit support de restitution visuelle pour chacun de ces décalages.

En d'autres termes, l'invention consiste tout d'abord à mettre en oeuvre un écran LCD a très grande ouverture, dénommée dans la pratique « LCD UHA » (pour *Ultra High Aperture*), dont l'intégration d'un réseau de micro-lentilles permet de concentrer la lumière dans la partie centrale de chaque cellule du LCD, en augmentant ainsi artificiellement l'ouverture de l'écran.

Ce faisant, on augmente la luminosité résultante de l'écran LCD malgré une puissance de lampe modérée, et en outre le contour des cellules n'est pratiquement pas visible.

Elle consiste en outre à contrôler l'angle de divergence du faisceau incident, pour ainsi permettre de contrôler de manière supplémentaire la forme et la taille du spot des cellules de l'écran LCD, de telle sorte que l'image en résultant présente un aspect continu, ce que l'on ne savait pas faire à ce jour, au moyen d'un écran LCD.

De plus, une optique de projection télécentrique permet d'augmenter le contraste et l'uniformité des images sur la photo.

L'invention concerne également le dispositif pour restituer visuellement une ou plusieurs images numériques affichées sur un écran LCD transparent.

Celui-ci comprend :

- une source lumineuse, sur le trajet optique de laquelle est positionné ledit écran LCD, au niveau duquel sont affichées des images numériques, notamment au moyen d'une unité centrale ;
- un obturateur destiné à obturer sur demande le faisceau de lumière ;
- un disque portant des filtres rouge, vert et bleu, afin de permettre la réalisation de photos en couleur, selon le principe de synthèse additive ;
- un objectif de projection télécentrique, situé entre l'écran LCD et le papier exposé ;
- deux polariseurs linéaires situés sur le trajet optique de la lumière d'exposition, de part et d'autre de l'écran LCD ;
- un organe destiné à permettre de réaliser un décalage latéral de l'écran LCD ou de chacun des pixels de l'image affichée sur le LCD, afin de permettre plusieurs expositions de l'image affichée sur le LCD ;
- un organe optique, situé en amont de l'écran LCD, propre à induire la diffusion du faisceau de lumière et son adaptation, en corrélation avec le réseau de micro-lentilles à la taille et la forme de chacune des cellules constitutives de l'écran LCD.

La manière dont l'invention peut être réalisée et les avantages qui en découlent ressortiront mieux des exemples de réalisation qui suivent donnés à titre indicatif et non limitatif, à l'appui des figures annexées.

La figure 1 est une représentation schématique de la ligne d'exposition d'une tireuse traditionnelle.

La figure 2 est une représentation schématique d'un pixel de LCD commercialisé par la société Epson.

La figure 3 a est une représentation schématique illustrant le sens de visualisation de l'image sur le LCD.

La figure 3b est une représentation schématique d'un système optique de projection classique.

La figure 3c est une représentation schématique d'un système optique de projection télécentrique pour LCD.

La figure 4a est une représentation schématique de la structure d'un LCD UHA, tel que commercialisé par la société Epson, et matérialisant la distribution d'énergie émergente pour un faisceau d'incidence parallèle.

La figure 4b est une représentation schématique de la formation du spot par la micro lentille d'un LCD UHA du type de celui décrit en relation avec la figure 4a, pour un faisceau d'incidence divergent, et matérialisant la taille du spot résultant.

La figure 5a est une représentation schématique d'une première forme de réalisation de l'invention, dont la figure 5b est une variante.

La figure 6 est une représentation schématique d'une seconde forme de réalisation de l'invention.

La figure 7 est une représentation de la ligne d'exposition d'une tireuse mettant en oeuvre le dispositif de la figure 6.

La description qui suit est plus particulièrement orientée vers un dispositif intégré au niveau d'une installation pour effectuer les tirages d'épreuves photographiques.

Il doit cependant être bien entendu que l'invention ne saurait se limiter à cette seule application.

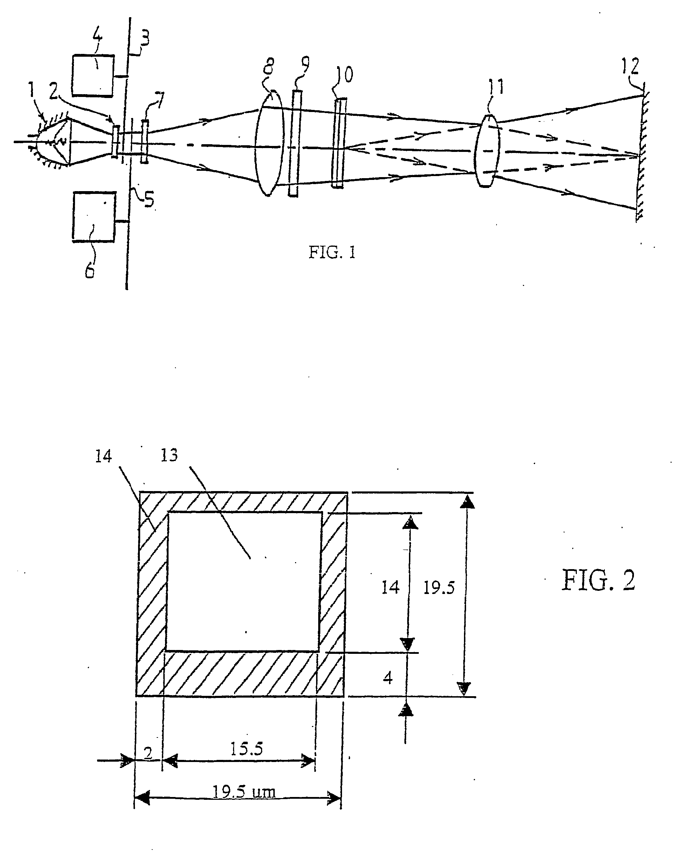

On a représenté au sein de la figure 1, la ligne d'exposition d'une tireuse traditionnelle.

Classiquement, on retrouve au sein de celle-ci les différents éléments suivants :

- une source lumineuse (1), typiquement constituée par une lampe halogène de 250 watts/24 volts ;
- un filtre anti-calorique (2) ;
- une tourelle d'obturation (3), mue en rotation au moyen d'un moteur électrique (4), destinée à obturer le faisceau incident émis par la source lumineuse (1), et assurant également si nécessaire la fonction de diaphragme ;
- un porte-filtre (5) également mu en rotation au moyen d'un moteur électrique (6), et portant trois filtres, respectivement rouge, vert et bleu, en vue de la réalisation d'épreuves couleurs par synthèse additive ;
- un diffuseur (7) destiné à élargir et à rendre plus uniforme le faisceau incident émanant de la source lumineuse (1) ;
- un condenseur (8) destiné à diriger le faisceau incident, après diffusion, au niveau d'un objectif de projection (11) ;
- un compensateur ou correcteur (9) de l'uniformité d'éclairage, typiquement constitué par un opalin ;
- un passe-vue (10), au niveau duquel le film est introduit et cadré pour permettre l'exposition des vues successives ;
- l'objectif de projection (11) déjà mentionné; celui-ci présente un facteur d'agrandissement variable, selon le format de photos à réaliser ; il est destiné à projeter sur le papier photosensible (12), l'image du film présent dans le passe-vue ;
- Et enfin un plateau destiné à recevoir le papier photosensible (12) au niveau duquel doit être imprimée l'image présente au niveau du passe-vue.

Dans le cadre de l'invention, le passe-vue (10) est remplacé par un écran LCD (15), par exemple constitué par un panneau commercialisé par la société EPSON, sous le n° L3P13Y-25G01, comportant une matrice de 1366x1024 pixels actifs, et au niveau duquel est susceptible d'être reproduite une image stockée sous forme numérique. Cet écran LCD (15) est précédé par un polariseur linéaire (16), nécessaire pour le fonctionnement dudit écran LCD. Ce polariseur est destiné à polariser la lumière issus du faisceau incident, selon une direction déterminée.

Cet écran LCD est muni d'une part, d'un masque (20), définissant des ouvertures situées en regard de chacune des cellules de l'écran. Cette ouverture correspond en général à la taille maximale du spot du pixel qu'on peut obtenir (= 57% de la surface totale du pixel géométrique).

En outre, l'écran LCD (15) comporte également un réseau de micro-lentilles (21), également situées au niveau de sa face amont, ledit réseau de micro-lentilles (21) étant lui-même situé en amont du masque (20), par rapport au sens de diffusion de la lumière, chacune des cellules constitutives de l'écran LCD étant associée à l'une de ces micro-lentilles.

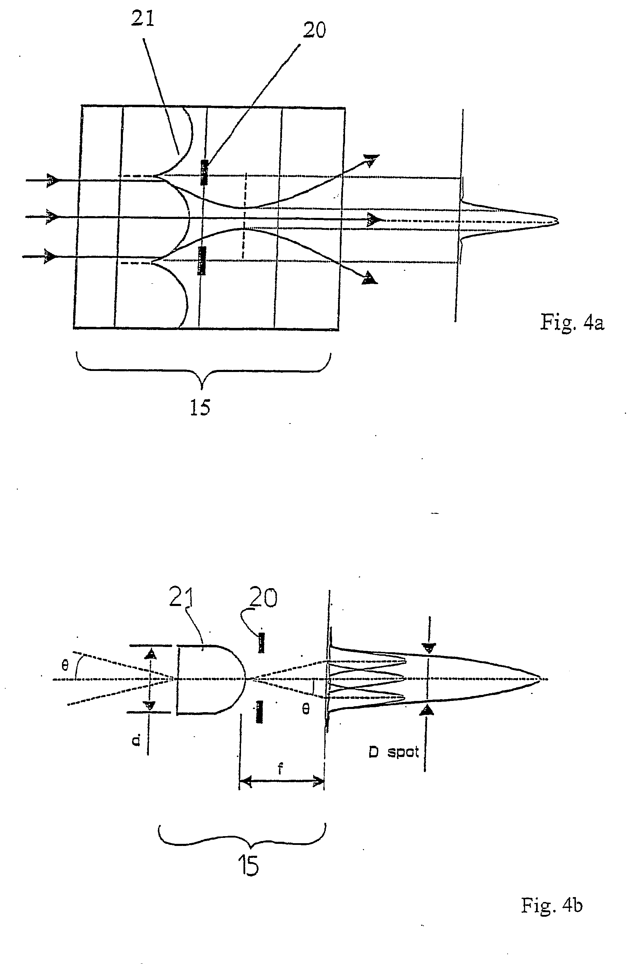

Ces micro-lentilles sont destinées initialement à collecter la lumière couvrant toute la surface géométrique du pixel, au lieu de la seule surface active du pixel, tel que cela est connu pour les écrans LCD traditionnels. La quantité de lumière collectée est donc supérieure (Fig.4a). Ces micro-lentilles focalisent la lumière au centre de la cellule de chacun des pixels du LCD, la distribution d'énergie du spot lumineux émergeant dudit pixel étant approximativement une fonction de Bessel d'une petite taille circulaire 4 à 5 fois inférieurs à celle du pixel pour un faisceau de lumière incidente parallèle (Fig. 4a). Cela introduit sur la photo résultante des traits blancs larges très visibles.

Pour un faisceau de lumière incidente très divergent, le masque noir du pixel tronque le faisceau d'image. La distribution d'énergie du spot lumineux du pixel est approximativement de fonction Sinc d'une forme quasi rectangulaire limitée par le masque noir. Il convient de rappeler que le masques noir a pour but de cacher les électrodes de l'électronique de commande de chaque pixel.

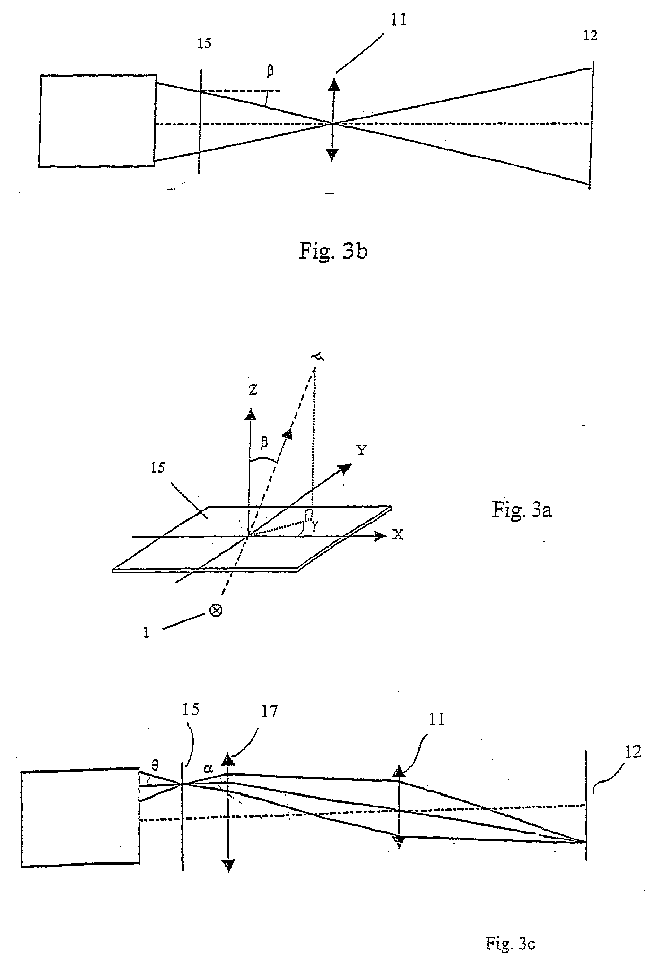

On a représenté en relation avec la figure 2, une vue schématique d'un pixel de LCD Epson L3913Y-25G01, comportant une zone active (13) et une zone inactive référencée (14). Comme l'ouverture du masque noir présente une surface de 57% de la surface totale du pixel géométrique, la photo résultante avec un traitement de décalage latéral des expositions, tel que décrit dans le document EP-A-0 987 875, présente encore des traits gris visibles aperçus auparavant.

Comme pour tous les écrans LCD, le contraste de l'image dépend de l'angle de visualisation. En utilisant une optique de projection classique, la photo réalisée est non homogène et de contraste variable.

L'invention consiste à non seulement surmonter ces défauts mais aussi à améliorer sensiblement la qualité de photo tant sur l'aspect continu de l'image que sur la résolution.

Afin de s'affranchir des conséquences des traits blancs ou gris visibles, il convient donc de pouvoir moduler tant la taille que la forme du spot du pixel. Pour l'homogénéité et le contraste de l'image sur la photo, il convient d'utiliser une optique de projection télécentrique. Enfin, afin d'optimiser la résolution, on ajoute des points d'image sur la photo, par le biais d'un décalage latéral, soit de l'écran LCD, soit par un décalage latéral des pixels affichés sur le LCD.

L'image affichée sur l'écran LCD, présente une variation de contraste en fonction de l'angle de visualisation $\beta$ et $\gamma$ (Fig. 3a). Pour $\beta=0°$, c'est-à-dire à la direction de visualisation perpendiculaire à l'écran LCD ou parallèle à l'axe optique de projection Z, l'image affichée a souvent un contraste maximum, qui dépend du LCD utilisé. Pour $\beta\neq0$, le contraste est plus faible et non homogène pour les angles $\gamma$.

C'est pour ces raisons, qu'en utilisant une optique de projection classique, qui donne des angles variables dépendant aux positions des pixels sur le LCD (Fig. 3b), l'image projetée sur le papier est non homogène et de contraste variable. Afin d'éviter; ou à tout le moins de diminuer cet effet intrinsèque inhérent à la technologie LCD, il est nécessaire d'utiliser un système optique de projection télécentrique. Un tel système optique télécentrique est typiquement constitué (voir figure 3c) de deux optiques convergentes, dont l'une est constituée par l'objectif principal (25) de projection de la ligne optique, et dont l'autre est constitué par une lentille de champ (17), de distance focale $F_0$. L'objectif principal (25) doit se situer dans le plan focal de la lentille de champ (17). Avec cet arrangement, tous les rayons principaux qui passent par le stop (diaphragme) de l'objectif principal (25) sont collimatés par la lentille de champ (17) dans l'espace d'objet, c'est-à-dire entre l'écran LCD et la lentille de champ (Fig. 3c). Cet ensemble optique permet donc d'assurer une incidence normale du rayon principal pour chacun des pixels du LCD. Il devient donc possible de corriger la variation du contraste et la non homogénéité de l'image.

La figure 4b représente la formation de l'image du spot du pixel sur l'écran LCD avec la micro lentille. Si la micro-lentille (21) est supposée parfaite, c'est à dire sans aberration, et que f et d sont respectivement la distance focale et le diamètre de la micro-lentille, on obtient le diamètre du disque d'Airy du spot :

$$D_{Airy} = 2.44\ \lambda f/d \qquad\qquad \text{------ (1)}$$

Le diamètre du disque d'Airy à 50% d'énergie maximale est environ :

$$\phi \approx 0.5\ D_{Airy} = 1.22\ \lambda f/d \qquad\qquad \text{------ (2)}$$

Le diamètre du spot pour un faisceau d'incidence de divergence circulaire $\theta$ est environ :

$$D_{spot} \approx \phi + 2\ f\ tg\theta = 1.22\ \lambda f/d + 2\ f\ tg\theta \qquad \text{------ (3)}$$

Pour un faisceau d'incidence procédant d'une divergence dans une direction (X par exemple) ou de différentes divergences dans plusieurs directions (X et Y par exemple), la forme du spot du pixel n'est plus ronde. C'est avec cette méthode que l'on peut contrôler la forme du spot du pixel.

Ainsi, si l'on met en oeuvre par exemple un LCD EPSON L3P13Y-25G01, f $\approx 107\mu m$, d $\approx 19.5\mu m$, pour $\lambda = 0.55\ \mu m$ et d'après la formule (3), on obtient un spot de diamètre $D_{spot} \approx 5\ \mu m$ pour $\theta \approx 0.5°$, $D_{spot} \approx 11\ \mu m$ pour $\theta \approx 2°$, et un spot de forme rectangulaire arrondie de taille 5 x 11 $\mu m$ pour $\theta_x \approx 0.5°$ et $\theta_y \approx 2°$. Pour un angle de divergence plus grand, $\theta \approx 5°$ par exemple, $D_{spot} \approx 22\ \mu m$. Ce dernier n'est pas possible parce que le masque noir vignette ou tronque le faisceau d'image. Le spot sera plus petit et de forme de l'ouverture du masque noir.

En réalité, la taille effective du spot, c'est-à-dire la taille du spot utile pour la formation de l'image sur le papier, est limitée par l'objectif de projection. L'ouverture de l'objectif définit l'angle de collection $\alpha$ du cône du faisceau lumineux pouvant passer dans cet objectif. Si $f_{num}$ représente l'ouverture (ou f-number en anglais) de l'objectif de projection et M l'agrandissement, on obtient l'angle de collection $\alpha$ du cône du faisceau utile selon l'expression suivante :

$$\alpha = arctg\ (1/(2(1+1/M)f_{num})) \qquad \text{----- (4)}$$

La figure 3c représente, d'une part l'angle de divergence $\theta$ du faisceau d'éclairage ou d'incidence, et l'angle de collection $\alpha$ du faisceau de projection utilisé. L'objectif de projection limite le faisceau d'incidence de divergence utile à θ ≈ α. Comme la taille du spot sur le LCD est liée à la divergence θ du faisceau d'incidence sur l'écran LCD (Cf formule (3)), l'objectif de projection limite donc la taille effective du spot du pixel. En conséquence, la taille effective du spot du pixel est liée à ces deux angles θ et α en combinaison avec la micro lentille de l'écran LCD et de l'effet de vignettage du masque noir. On obtient ainsi la formule de l'évaluation de la taille effective du spot du pixel :

$$D_{\text{spot-eff}} \approx \phi + 2\,f\,\text{tg}\theta = 1.22\,\lambda f/d + 2\,f\,\text{tg}\theta \quad (\theta = \alpha\ \text{pour}\ \theta > \alpha) \quad \text{------ (5)}$$

Lorsque α devient grand (et θ > α), afin que la taille effective du spot $D_{\text{spot-eff}}$ calculée selon la formule (5) approche la taille de l'ouverture du masque noir de l'écran LCD, l'effet de vignettage du masque devient visible. La forme du spot devient donc rectangulaire comme l'ouverture du masque.

Dans l'exemple mettant en oeuvre un objectif de projection d'ouverture $f_{\text{num}}$=8 et d'agrandissement M=10, l'angle de collection devient d'après la formule (4),

$$\alpha \approx 3.3°$$

et la taille effective maximale du spot, d'après la formule (5) en limitant θ = α,

$$D_{\text{spot-eff}} \approx 16\ \mu\text{m}.$$

Cette taille est plus grande que la taille de l'ouverture du masque noir de l'écran LCD. L'effet de vignettage du masque limite donc le spot à une forme rectangulaire. Pour la mise en oeuvre de l'addition d'images selon les enseignements du document EP-A-0 987 875, cette taille est trop grande. Il est donc nécessaire de contrôler les angles θ et α afin de contrôler la taille et la forme du spot. Comme l'ouverture de l'optique de projection est souvent fixe pour raison de la résolution de d'image et de la collection de lumière, l'angle α est donc prédéfini. On peut plus facilement contrôler l'angle de divergence θ du faisceau d'éclairage.

A cet effet, l'invention préconise la mise en place d'un organe optique, en amont de l'écran LCD.

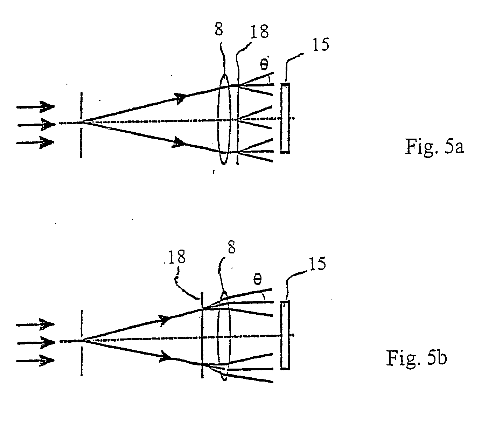

Dans une première forme de réalisation, il est mis en place sur le trajet optique, un diffuseur spécifique (18) entre la lentille de collimation (8) et l'écran LCD (15) (cf Fig. 5a). Le diffuseur diffuse la lumière incidente dans un cône de son angle de diffusion. On peut donc adapter les caractéristiques optiques du diffuseur selon les besoins.

Ainsi, si l'on souhaite obtenir un spot circulaire émergent de l'écran LCD, on met en oeuvre un diffuseur circulaire. C'est-à-dire que la diffusion est symétrique par rapport à l'axe du faisceau lumineux d'incidence.

En revanche, afin d'obtenir une forme carrée ou rectangulaire du spot, on met en oeuvre un diffuseur assurant une double diffusion selon la direction X,Y, définissant le plan dans lequel sont contenues chacune des cellules de l'écran LCD. Ce type de diffuseur peut être réalisé par la technologie holographique bien connue pour cette application.

Ce diffuseur (18) peut également être positionné juste en amont de la lentille de collimation (8) (Cf figure 5b), l'effet optique en résultant étant sensiblement équivalent à celui obtenu avec la configuration de la figure 5a.

La mise en oeuvre d'un tel diffuseur s'avère particulièrement efficace. Cependant, un diffuseur spécifique (18) des angles de divergence bien définis est nécessaire.

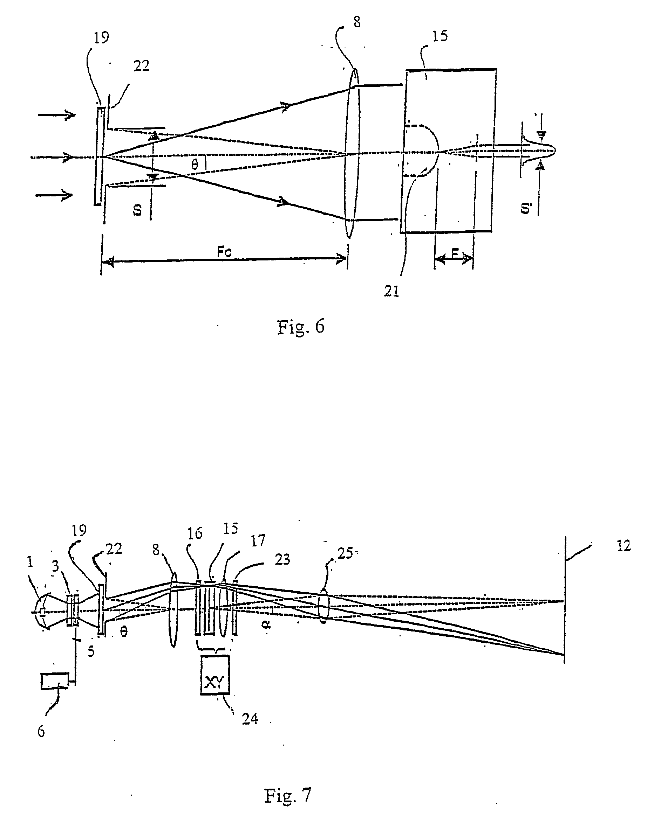

Par raison d'économie et de facilité de réglage, l'invention propose une seconde forme de réalisation, représentée en relation avec la figure 6.

Dans cette configuration, on positionne, juste à côté d'un diffuseur (19), un diaphragme d'éclairage (22) de taille et de forme modulable, faisant fonction de contrôle de la divergence du faisceau d'éclairage θ et donc de la taille et de la forme du spot du pixel. Le diffuseur (19) est placé dans le plan focal de la lentille de collimation (8), et est situé sur le chemin d'éclairage de la source lumineuse (1) pour assurer un éclairage uniforme au niveau de la lentille de collimation (8).

Dans cette hypothèse, on obtient l'angle de divergence du faisceau d'éclairage issu de la lentille de collimation (8) par l'expression :

$$\theta = \text{arctg}(S/(2F_c)) \quad \text{------ (6)}$$

où S est la taille ($D_x$, $D_y$ ou D) de l'ouverture de la pupille (22), et $f_c$ la distance focale de la lentille de collimation (8). En combinant les formules (6) et (5), la taille effective du spot du pixel peut être également évaluée comme suit :

$$D_{spot\text{-}eff} \approx \phi + 2\,f\,tg\theta = 1.22\,\lambda f/d + Sf/f_c \qquad (\theta = \alpha \text{ pour } \theta > \alpha) \qquad \text{------ (7)}$$

En outre, si l'on néglige l'effet de diffraction de l'optique, la taille du spot émergeant de la cellule de l'écran LCD peut être évaluée à partir de la formule d'imagerie géométrique :

$$S' = S\,f / f_c \qquad\qquad \text{------ (8)}$$

où S' est la taille ($D_x$, $D_y$ ou D) émergente du spot du pixel et fla distance focale de la micro-lentille (21).

On observe un terme ($\phi \approx 1.22\lambda f/d$) en moins dans la formule (8) par rapport à la formule (7) : celui-ci correspond au terme de diffraction de l'optique. En effet, lorsque la taille du spot est grande par rapport à la diffraction dans le cas de l'optique géométrique, l'effet de diffraction peut être négligé. Par contre, lorsque le spot est comparable à la taille de diffraction, l'effet de diffraction de l'optique est important.

Comme la micro lentille de l'écran LCD présente des défauts de régularité ou des aberrations optiques et que le masque noir de l'écran LCD et l'ouverture de l'objectif de projection tronquent le faisceau lumineux dé formation de l'image du système, la taille effective du spot évaluée par la formule (5) ou (7) n'est pas assez précise. Les techniques présentées ont pour but d'orienter le moyen et le sens de recherche. En pratique, il est convenable de faire d'abord une évaluation, puis ajuster plus précisément le choix pour compenser les différents facteurs de défauts éventuels des composants optiques.

A titre exemple, pour un écran LCD UHA Epson de référence L3P13Y-25G01 et pour un objectif télécentrique d'ouverture f/8, fonctionnant à 10x, correspondant à un angle de collection $\alpha \approx 3.3°$, un diffuseur holographique (18) d'un angle de divergence $\theta_x \approx 6.5°$ et $\theta_y \approx 7°$ s'avère convenable pour réaliser un spot carré de longueur de côté de 0.5 fois la taille du pixel géométrique (cf. Fig. 5a et 5b). Si l'on contrôle uniquement la pupille d'éclairage (22), un diaphragme de l'ordre de 9 x 10 mm et une distance focale de 114 mm pour la lentille de collimation (8) sont convenables pour les même conditions (cf. Fig. 7).

On conçoit dès lors que l'on aboutit à un spot de taille et de forme déterminées, que l'on peut parfaitement ajuster avec la taille de la surface active (13) de la cellule de l'écran LCD.

Les deux techniques décrites précédemment pour jouer sur la forme et la taille du pixel peuvent être mis en oeuvre indépendamment ou de manière additionnelle, l'une avec l'autre, afin d'aboutir à la taille et la forme souhaitées du spot de pixel.

On a représenté en relation avec la figure 7 un système optique mettant en oeuvre le dispositif de la présente invention, et susceptible d'être intégré notamment au niveau d'une tireuse photographique. La lumière émise par la source lumineuse (1) est dirigée vers un diffuseur (19) après avoir été filtrée par un filtre anti-calorique (3) et un jeu de filtres (5) de couleurs rouge, vert, bleu, a l'instar de ce qui a été décrit précédemment.

Le diffuseur (19) diffuse la lumière uniformément sur la lentille de collimation (8) à travers une pupille de champ (22), permettant de contrôler l'angle de divergence $\theta$ du faisceau d'incidence, et par voie de conséquence, la forme et la taille du spot du pixel du LCD, ainsi que décrit précédemment.

L'écran LCD (15) est mis en oeuvre pour remplir la fonction d'afficheur de l'image numérique à exposer, et est muni en amont, d'un polariseur d'entrée linéaire (16), et en aval d'un polariseur de sortie linéaire (23), dans l'hypothèse où ledit LCD n'est pas équipé de tels polariseurs internes.

Une lentille de champ (17) est mise en place sur le trajet optique, entre l'écran LCD (15) et le polariseur (23), et en association avec l'objectif principal de projection (25) constitue une optique de projection télécentrique, nécessaire pour l'utilisation d'un écran LCD afin d'augmenter le contraste et l'uniformité de l'image sur la photo. Une platine de micro-déplacement en X et en Y (24) du type piézo-électrique, c'est à dire dans le plan de l'écran LCD, est mise en oeuvre, afin d'assurer le déplacement latéral du LCD, perpendiculairement à l'axe optique de la ligne optique ainsi réalisée.

Ces déplacements latéraux du composant LCD sont destinés à permettre l'exposition de 4, 9 voire 16 projections d'imagettes résultant de la décomposition d'une même image affichée sur l'écran LCD, et ce, dans l'esprit de ce qui a été décrit dans le brevet européen 0 987 875 du Demandeur, déjà cité, et dont le contenu est incorporé par référence.

Succinctement, la technique mise en oeuvre consiste à redimensionner l'image originale en un nombre entier de pixels, typiquement 4 fois plus, 9 fois plus, voire même 16 fois plus que le nombre de pixels disponibles au niveau de l'écran LCD.

Ce redimensionnement est effectué au niveau de l'unité centrale, assurant le stockage des images numériques à réaliser sur le support photographique (12). Au sein de cette unité centrale, cette image ainsi redimensinonée est divisée en quatre trames, neuf ou seize trames, sous la forme de carrés de petites dimensions.

Ainsi, dans la configuration selon laquelle on fait apparaître quatre fois plus de pixels que le nombre de pixels possible de l'écran LCD, on procède, pour chaque image à restituer à quatre expositions, les quatre trames de l'image originale étant affichées successivement sur l'écran LCD, en procédant, entre chaque exposition, soit au déplacement de l'écran LCD au moyen de la platine piézo-électrique XY (24), soit en procédant à une modification du trajet optique, par exemple au moyen d'une lame à faces parallèles légèrement inclinée, placée sur le trajet optique de la ligne de tirage entre l'écran LCD et l'objectif de projection (11), telle que décrit en préambule.

Dans l'hypothèse d'une multiplication de l'image originale par quatre, le spot du pixel doit présenter une forme carrée, d'une surface égale à un quart de la surface totale du pixel géométrique.

Au sein de la photo exposée, les traits gris ou blancs aperçus avec les techniques antérieures ne sont plus visibles à l'oeil, ou très peu visibles avec une loupe. En outre, il est observé une augmentation de la résolution, puisque celle-ci atteint typiquement, avec une multiplication de l'image par quatre, une valeur voisine de 231 dpi pour une photo de format 20x30 cm en utilisant l'écran LCD UHA Epson précité.

Il est également possible, toujours en jouant sur le déplacement de la platine piézo-électrique (XY) (24), de procéder non pas à quatre expositions d'une même image, mais à 9 expositions de ladite image, préalablement redimensionnée en conséquence au niveau de l'unité centrale associée.

Le spot du pixel LCD doit présenter alors une forme carrée d'une surface égale à $1/9^{\text{ème}}$ de la surface totale du pixel géométrique.

Ainsi, avec l'écran LCD EPSON du type de celui décrit précédemment, il est possible, avec un tel dispositif, d'aboutir à une résolution voisine de 346 dpi, pour une photographie de format 20 x 30 cm, soit une très nette optimisation de la résolution, même pour une photographie de relativement grand format.

On peut encore augmenter cette résolution en multipliant le nombre d'expositions non plus par 9 mais par 16. Dans cette configuration, l'image est subdivisée en seize imagettes. Le spot du pixel doit présenter une surface égale à $1/16^{\text{ème}}$ de la surface totale du pixel géométrique de chacune des cellules de l'écran LCD. Comme le pixel est petit, le spot peut avoir une forme circulaire, plus facile à réaliser.

On aboutit à une résolution de l'ordre de 462 dpi pour une photographie de format 20 x 30 cm. Il est également possible de réaliser des photographies de taille plus importante. Ainsi, si l'on conserve une résolution maximum de 300 dpi, on a la possibilité de réaliser des photographies de format 348 x 462 mm, ce que l'on ne pouvait faire à ce jour avec la technologie des LCD.

On conçoit dès lors tout l'intérêt du dispositif et du procédé conforme à l'invention, dans la mesure où il permet au moyen d'un système optique relativement simple à mettre en oeuvre, d'optimiser la résolution et donc le rendu des photographies, tout en s'affranchissant des inconvénients liés aux écrans LCD, à savoir la présence de traits blancs ou gris, correspondant aux zones inactives des pixels LCD ou aux zones de surexposition, le contraste variable et non homogénéité et la résolution insuffisante sur la photo de plus grand format.

## Revendications

**1.** Procédé pour restituer visuellement une image numérique, affichée sur un écran à cristaux liquides LCD transparent, qui consiste :

- à associer à l'écran LCD (15) un réseau de micro-lentilles (21) au niveau de sa face d'entrée, en amont d'un masque noir (20), définissant des ouvertures situées en regard de chacune des cellules constitutives du LCD, chacune desdites cellules étant associée à une micro-lentille ;
- à utiliser une optique de projection télécentrique, destinée à augmenter le contraste et l'uniformité de l'image sur la restitution visuelle ;
- à contrôler l'angle de divergence θ du faisceau incident de ladite lumière d'exposition ou d'éclairement, de telle sorte à induire, en association avec le réseau de micro-lentilles (21) et le masque (20), le contrôle de la taille et de la forme du spot émergeant de chacune des cellules de l'écran LCD, et en association avec l'optique de projection télécentrique (17, 25) le contrôle de la taille et la forme effectives des pixels sur la restitution visuelle ;
- à opérer au moyen d'un organe, au moins un décalage latéral dans le plan de projection de l'écran LCD (15) ou de chacun des pixels de l'image affichée sur ledit écran LCD ;
- et à réaliser une ou plusieurs expositions au niveau dudit support de restitution visuelle pour chacun de ces décalages.

**2.** Procédé pour restituer visuellement une image numérique, affichée sur un écran à cristaux liquides LCD transparent selon la revendication 1, *caractérisé* **en ce que** :

• l'image numérique à restituer subit un redimensionnement au niveau d'une unité centrale associée, stockant lesdites images numériques ;
• ladite image ainsi redimensionnéeest divisée en 4, 9 ou 16 trames affichables sur l'écran LCD ;
• on procède à une exposition de chaque trame de l'image affichée sur l'écran LCD, en effectuant entre deux expositions consécutives un décalage discret de l'ensemble des pixels de l'image affichée sur l'écran LCD selon les directions d'orientation OX et OY desdits pixels, c'est à dire dans le plan comprenant le LCD, symétriquement par rapport au centre de chacun des pixels.

**3.** Procédé pour restituer visuellement une image numérique, affichée sur un écran à cristaux liquides LCD transparent selon la revendication 2, *caractérisé* **en ce que** chacune des trames subit trois plans d'image, selon les trois couleurs rouge, vert et bleu, les images résultantes étant alors obtenues en couleur selon le procédé de synthèse additive.

**4.** Dispositif pour restituer visuellement une ou plusieurs images numériques affichées sur un écran LCD transparent, comprenant :

- une source lumineuse (1), sur le trajet optique de laquelle est positionné ledit écran LCD (15), au niveau duquel sont affichées des images numériques, notamment au moyen d'une unité centrale ;
- un obturateur (3) destiné à obturer sur demande le faisceau de lumière ;
- un objectif de projection (25), situé entre l'écran LCD et le papier exposé ;
- deux polariseurs linéaires (16, 23) situés sur le trajet optique de la source lumineuse, et positionnés de part et d'autre de l'écran LCD (15) ;
- un organe (24), destiné à permettre de réaliser un décalage latéral de l'écran LCD ou de chacun des pixels de l'image affichée sur ledit écran LCD, afin de permettre plusieurs expositions de l'image affichée sur le LCD ;

*caractérisé* **:**

- **en ce que** l'écran LCD (15) est associé à un réseau de micro-lentilles (21) au niveau de sa face amont, en amont d'un masque (20), définissant des ouvertures situées en regard de chacune des cellules constitutives de l'écran LCD, chacune des cellules constitutives de l'écran LCD étant associée à une micro-lentille ;
- **en ce que** l'écran LCD (15) est associé à une optique de projection télécentrique (17, 25), destinée à augmenter le contraste et l'uniformité des images sur la restitution visuelle ;
- et **en ce que** le dispositif comporte en outre un organe optique (18, 19, 22), situé en amont de l'écran LCD, propre à induire la diffusion du faisceau de lumière et son adaptation, en corrélation avec le réseau de micro-lentilles et le masque à la taille et la forme de chacune des cellules constitutives de l'écran LCD.

**5.** Dispositif pour restituer visuellement une ou plusieurs images numériques affichées sur un écran LCD transparent selon la revendication 4, *caractérisé* **en ce que** l'organe optique destiné à induire la diffusion du faisceau de lumière et son adaptation est constitué d'un diffuseur (18), positionné autour d'une lentille de collimation (8), située sur le trajet optique du dispositif.

**6.** Dispositif pour restituer visuellement une ou plusieurs images numériques affichées sur un écran LCD transparent selon la revendication 4, *caractérisé* **en ce que** l'organe optique destiné à induire la diffusion du faisceau de lumière et son adaptation est constitué par l'association d'un diffuseur (19) un diaphragme d'éclairage (22) de taille et de forme modulable, le diffuseur (19) étant placé dans le plan focal d'une lentille de collimation (8), située sur le trajet optique de la source lumineuse, en amont de l'écran LCD (15).

**7.** Dispositif pour restituer visuellement une ou plusieurs images numériques affichées sur un écran LCD transparent selon l'une des revendications 4 à 6, *caractérisé* **en ce qu'**il comprend un organe (24) apte à opérer au moins un décalage latéral dans le plan de projection de chacun des pixels de l'image affichée sur le LCD (15).

**8.** Dispositif pour restituer visuellement une ou plusieurs images numériques affichées sur un écran LCD transparent selon la revendication 7, *caractérisé* **en ce que** l'organe assurant le décalage latéral dans le plan de projection de chacun des pixels de l'image affichée sur l'écran LCD (15) est constitué par une platine à déplacement piezo-électrique (24), assurant le décalage de l'écran LCD (15) lui-même.

**9.** Dispositif pour restituer visuellement une ou plusieurs images numériques affichées sur un écran LCD transparent selon la revendication 7, *caractérisé* **en ce que** l'organe assurant le décalage latéral dans le plan de projection de chacun des pixels de l'image affichée sur l'écran LCD (15) est constitué par une lame à faces parallèles, d'épaisseur constance, transparente au spectre de la lumière d'exposition mise en oeuvre, située sur le trajet optique du dispositif entre l'écran LCD (15) et l'objectif de projection (11), ladite lame étant susceptible d'être animée d'un mouvement de rotation discret ou continu, dont l'axe de rotation est parallèle ou non audit trajet optique, ladite lame étant incliné d'un angle fixe par rapport au plan perpendiculaire à son axe de rotation.

**Claims**

1.  A method for visually restoring a digital image displayed on a transparent LCD screen, consisting in :

    - associating with the LCD screen (15) an array of microlenses (21) at its input face, upstream of a black mask (20) defining apertures positioned facing each of the cells constituting the LCD, each of said cells being associated with one microlens ;
    - using telecentric projection optics designed to increase the contrast and the uniformity of the image in the visual restoration ;
    - controlling the divergence angle θ of the incident beam of said exposure or illuminating light, so as to allow, in association with the microlens array (21) and the mask (20), the control of the size and shape of the spot emerging from each of the cells of the LCD screen and, in association with the telecentric projection optics (17, 25), the control of the effective size and shape of the pixels in the visual restoratio ;
    - performing, by means of a mechanism, at least one lateral shift in the projection plane of the LCD screen (15) or of each of the pixels of the image displayed on said LCD screen ;
    - and carrying out one or more exposures on said visual restoration medium for each of these shifts.

2.  The method for visually restoring a digital image displayed on a transparent LCD screen as claimed in claim 1, **characterized in that** :

    • the digital image to be restored undergoes a rescaling within an associated central processing unit that stores said digital images ;
    • said thus rescaled image is divided into 4, 9 or 16 frames displayable on the LCD screen;
    • an exposure of each image frame displayed on the LCD screen is performed, while effecting, between two consecutive exposures, a discrete shift of all the image pixels displayed on the LCD screen oriented in the directions OX and OY of said pixels, in other words in the plane comprising the LCD and symmetrically with respect to the center of each of the pixels.

3.  The method for visually restoring a digital image displayed on a transparent LCD screen as claimed in claim 2, **characterized in that** each of the frames undergoes three image planes, according to the three colors red, green and blue, the resulting images then being obtained in color by the additive synthesis process.

4.  A device for visually restoring one or more digital images displayed on a transparent LCD screen, comprising :

    - a light source (1), in whose optical path is positioned said LCD screen (15), on which are displayed digital images, notably by means of a central processing unit ;
    - a shutter (3) for blocking the light beam on demand ;
    - a projection lens (25), situated between the LCD screen and the exposed paper ;
    - two linear polarizers (16, 23) situated in the optical path of the light source, and positioned on either side of the LCD screen (15) ;
    - a mechanism (24) designed to allow a lateral shift of the LCD screen or of each of the pixels of the image displayed on said LCD screen to be performed, in order to allow two or more exposures of the image displayed on the LCD ;

    **characterized in that** :

    - the LCD screen (15) is associated with an array of microlenses (21) at its upstream face, upstream of a mask (20) defining apertures situated facing each of the cells constituting the LCD screen, each of the cells constituting the LCD screen being associated with one microlens ;
    - the LCD screen (15) is associated with telecentric projection optics (17, 25) designed to increase the contrast and the uniformity of the images in the visual restoration ;

- the device also comprises an optical mechanism (18, 19, 22), situated upstream of the LCD screen, designed to allow the diffusion of the light beam and its adaptation, in correlation with the microlens array and the mask, to the size and shape of each of the cells constituting the LCD screen.

**5.** The device for visually restoring one or more digital images displayed on a transparent LCD screen as claimed in claim 4, **characterized in that** the optical mechanism designed to allow the diffusion of the light beam and its adaptation is formed by a diffuser (18), positioned around a collimating lens (8), situated in the optical path of the device.

**6.** The device for visually restoring one or more digital images displayed on a transparent LCD screen as claimed in claim 4, **characterized in that** the optical mechanism designed to allow the diffusion of the light beam and its adaptation is formed by the association of a diffuser (19), an illumination diaphragm (22) of adjustable size and shape, the diffuser (19) being placed in the focal plane of a collimating lens (8), situated in the optical path of the light source and upstream of the LCD screen (15).

**7.** The device for visually restoring one or more digital images displayed on a transparent LCD screen as claimed in any of claims 4 to 6, **characterized in that** it comprises a mechanism (24) capable of performing at least one lateral shift in the projection plane of each of the image pixels displayed on the LCD (15).

**8.** The device for visually restoring one or more digital images displayed on a transparent LCD screen as claimed in claim 7, **characterized in that** the mechanism providing the lateral shift in the projection plane of each of the pixels of the image displayed on the LCD screen (15) is formed by a piezo-electric displacement holder (24) providing the shift of the LCD screen (15) itself.

**9.** The device for visually restoring one or more digital images displayed on a transparent LCD screen as claimed in claim 7, **characterized in that** the mechanism providing the lateral shift in the projection plane of each of the pixels of the image displayed on the LCD screen (15) is formed by a thin plate of uniform thickness with parallel faces that is transparent to the spectrum of the exposure light used and is situated in the optical path of the device between the LCD screen (15) and the projection lens (11), said thin plate being capable of a discrete or continuous rotational movement, whose axis of rotation is parallel or not to said optical path, said thin plate being inclined at a fixed angle with respect to the plane perpendicular to its axis of rotation.

**Patentansprüche**

**1.** Verfahren zur visuellen Wiedergabe eines digitalen Bildes, welches auf einem transparenten LCD-Flüssigkristall-Bildschirm angezeigt wird, bestehend aus:

- Zuordnen eines Rasters von Mikrolinsen (21) zum LCD-Bildschirm (15) im Bereich seiner Eingangsseite, in Richtung des Lichtstroms stromaufwärts einer schwarzen Maske (20), welche Öffnungen definiert, die jeweils gegenüber einer der das LCD bildenden Zellen liegen, wobei jede der genannten Zellen einer Mikrolinse zugeordnet ist;
- Verwenden einer telezentrischen Projektionsoptik, die dazu bestimmt ist, den Kontrast und die Gleichförmigkeit des Bildes in der visuellen Wiedergabe zu verstärken;
- Steuern des Divergenzwinkels θ des einfallenden Strahls des genannten Belichtungs- oder Beleuchtungslichtes, so daß in Verbindung mit dem Raster von Mikrolinsen (21) und der Maske (20) die Steuerung der Größe und der Form des aus jeder der Zellen des LCD-Bildschirms austretenden Punktes bewirkt wird und in Verbindung mit der telezentrischen Projektionsoptik (17,25) die Steuerung der effektiven Größe und Form der Pixel in der visuellen Wiedergabe gesteuert wird;
- Ausführen mit Hilfe eines Mittels mindestens einer seitlichen Verschiebung in der Projektionsebene des LCD-Bildschirms (15) oder der Ebene jedes der Pixel des auf dem genannten LCD-Bildschirm angezeigten Bildes;
- und Durchführen einer oder mehrerer Belichtungen im Bereich des genannten Trägers der visuellen Wiedergabe für jede dieser Verschiebungen.

**2.** Verfahren zur visuellen Wiedergabe eines digitalen Bildes, welches auf einem transparenten LCD-Flüssigkristall-Bildschirm angezeigt wird, nach Anspruch 1, **dadurch gekennzeichnet, daß**:

• das wiederzugebende digitale Bild einer Redimensionierung im Bereich einer zugeordneten Zentraleinheit unterzogen wird, welche die genannten digitalen Bilder speichert;
• das auf diese Weise redimensionierte Bild in 4, 9 oder 16 auf dem LCD-Bildschirm anzeigbare Einzelbilder aufgeteilt wird;
• eine Belichtung jedes Einzelbildes des auf dem LCD-Bildschirm angezeigten Bildes durchgeführt wird, indem zwischen zwei aufeinanderfolgenden Belichtungen eine diskrete Verschiebung der Pixel-Anordnung des auf dem LCD-Bildschirm angezeigten Bildes gemäß den Orientierungsrichtungen OX und OY der genannten Pixel erfolgt, das heißt in der das LCD enthaltenden Ebene symmetrisch in bezug auf die Mitte jedes der Pixel.

3. Verfahren zur visuellen Wiedergabe eines digitalen Bildes, welches auf einem transparenten LCD-Flüssigkristall-Bildschirm angezeigt wird, gemäß Anspruch 2, **dadurch gekennzeichnet, daß** jedes der Einzelbilder drei Bildebenen gemäß den drei Farben Rot, Grün und Blau aufweist, wobei die resultierenden Bilder in Farbe gemäß dem Verfahren der additiven Farbsynthese erhalten werden.

4. Vorrichtung zur visuellen Wiedergabe eines oder mehrerer digitaler Bilder, die auf einem transparenten LCD-Bildschirm angezeigt werden, umfassend:

- eine Lichtquelle (1), in deren Lichtweg der genannte LCD-Bildschirm (15) angeordnet ist, auf dem digitale Bilder angezeigt werden, insbesondere mittels einer Zentraleinheit;
- einen Verschluß (3), der zum Abdecken des Lichtstrahls auf Anforderung bestimmt ist;
- ein Projektionsobjektiv (25), welches zwischen dem LCD-Bildschirm und dem belichteten Papier angeordnet ist;
- zwei lineare Polarisatoren (16,23), welche in dem Lichtweg der Lichtquelle angeordnet und zu beiden Seiten des LCD-Bildschirms (15) positioniert sind;
- ein Mittel (24), welches dazu bestimmt ist, die Erzeugung einer seitlichen Verschiebung des LCD-Bildschirms oder jedes der Pixel des auf dem genannten LCD-Bildschirm angezeigten Bildes zu erlauben, um mehrere Belichtungen des auf dem LCD angezeigten Bildes zu ermöglichen.

**dadurch gekennzeichnet, daß**

- der LCD-Bildschirm (15) einem Raster von Mikrolinsen (21) zugeordnet ist, die im Bereich seiner in Richtung des Lichtstroms stromaufwärts liegenden Seite angeordnet ist, stromaufwärts in bezug auf eine Maske (20), welche Öffnungen bildet, die gegenüber jeder der den LCD-Bildschirm bildenden Zellen liegen, wobei jede dieser den LCD-Bildschirm bildenden Zellen einer Mikrolinse zugeordnet ist;
- der LCD-Bildschirm (15) einer telezentrischen Projektionsoptik (17,25) zugeordnet ist, welche dazu bestimmt ist, den Kontrast und die Gleichförmigkeit der Bilder in der visuellen Wiedergabe zu erhöhen;
- und die Vorrichtung ferner ein optisches Mittel (18,19,22) aufweist, das in Richtung des Lichtstroms stromaufwärts von dem LCD-Bildschirm liegt und zum Bewirken der Diffusion des Lichtstrahls und seiner Anpassung geeignet ist, in Korrelation mit dem Mikrolinsen-Raster und der Maske in Größe und Form jeder der den LCD-Bildschirm bildenden Zellen.

5. Vorrichtung zur visuellen Wiedergabe eines oder mehrerer digitaler Bilder, die auf einem transparenten LCD-Bildschirm angezeigt werden, gemäß Anspruch 4, **dadurch gekennzeichnet, daß** das optische Mittel, welches zum Bewirken der Diffusion des Lichtstrahls und seiner Anpassung bestimmt ist, von einem Diffusor (18) gebildet wird, der um eine Kollimatorlinse (8) herum angeordnet ist, welche in dem Lichtweg der Vorrichtung angeordnet ist.

6. Vorrichtung zur visuellen Wiedergabe eines oder mehrerer digitaler Bilder, die auf einem transparenten LCD-Bildschirm angezeigt werden, gemäß Anspruch 4, **dadurch gekennzeichnet, daß** das optische Mittel, welches zum Bewirken der Diffusion des Lichtstrahls und seiner Anpassung bestimmt ist, von der Verbindung eines Diffusors (19) und einer Beleuchtungsblende (22) veränderbarer Größe und Form gebildet wird, wobei der Diffusor (19) in der Brennebene einer Kollimatorlinse (8) plaziert ist, welche auf dem Lichtweg der Lichtquelle, in Richtung des Lichtstroms stromaufwärts von dem LCD-Bildschirm (15), liegt.

7. Vorrichtung zur visuellen Wiedergabe eines oder mehrerer digitaler Bilder, die auf einem transparenten LCD-Bildschirm angezeigt werden, gemäß einem der Ansprüche 4 bis 6, **dadurch gekennzeichnet, daß** sie ein Mittel (24) aufweist, welches dazu geeignet ist, mindestens eine seitliche Verschiebung in der Projektionsebene jedes der Pixel des auf dem LCD (15) angezeigten Bildes zu bewirken.

8. Vorrichtung zur visuellen Wiedergabe eines oder mehrerer digitaler Bilder, die auf einem transparenten LCD-Bildschirm angezeigt werden, gemäß Anspruch 7, **dadurch gekennzeichnet, daß** das die seitliche Verschiebung in der Projektionsebene jedes der Pixel des auf dem LCD-Bildschirm (15) angezeigten Bildes sicherstellende Mittel von einer Platine zum piezoelektrischen Verlagern (24) gebildet ist, welche die Verschiebung des LCD-Bildschirms (15) selbst sicherstellt.

9. Vorrichtung zur visuellen Wiedergabe eines oder mehrerer digitaler Bilder, die auf einem transparenten LCD-Bildschirm angezeigt werden, gemäß Anspruch 7, **dadurch gekennzeichnet, daß** das die seitliche Verschiebung in der Projektionsebene jedes der Pixel des auf dem LCD-Bildschirm (15) angezeigten Bildes sicherstellende Mittel durch eine Platte mit parallelen Flächen und konstanter Dicke gebildet wird, welche für das Spektrum des verwendeten Belichtungslichtes transparent ist und im Lichtweg der Vorrichtung zwischen dem LCD-Bildschirm und dem Projektionsobjektiv (11) liegt, wobei die genannte Platte dazu geeignet ist, zu einer diskreten oder kontinuierlichen Drehbewegung angetrieben zu werden, deren Drehachse parallel oder nicht parallel zum genannten Lichtweg ist, wobei die genannte Platte um einen festen Winkel in bezug auf die rechtwinklig zu ihrer Drehachse verlaufende Ebene geneigt ist.

FIG. 1

FIG. 2

Fig. 3b

Fig. 3a

Fig. 3c

Fig. 4a

Fig. 4b

Fig. 5a

Fig. 5b

Fig. 6

Fig. 7